# FASCICULE DE BREVET EUROPEEN

(11) **EP 2 134 957 B1**
(45) Date de publication et mention de la délivrance du brevet: **09.07.2014**
(21) Numéro de dépôt: 08775602.9
(22) Date de dépôt: 26.02.2008
(51) Int. Cl.: F02M 55/00, F02M 55/02

(54) **DISPOSITIF POUR RECUPERER DES FUITES DE CARBURANT SUR LES TUBES D'ALIMENTATION D'UNE INTERFACE**
VORRICHTUNG ZUR AUFNAHME VON BRENNSTOFFLECKAGEN BEI VERSORGUNGSLEITUNGEN EINER KOPPLUNGSSTELLE
DEVICE FOR COLLECTING FUEL LEAKS ON THE SUPPLY PIPES OF AN INTERFACE

(30) Priorité: 27.02.2007 FR 0701403
(43) Date de publication de la demande: 23.12.2009
(73) Titulaire: Senior Automotive Blois SAS, 41000 Blois (FR)
(72) Inventeur: GUERINEAU, Thierry, F-41000 Blois (FR)
(74) Mandataire: Hammond, William
(86) Numéro de dépôt international: PCT/FR2008/000251
(87) Numéro de publication internationale: WO 2008/122722

(56) Documents cités:
- WO-A-03/087567
- DE-A1- 19 913 803
- GB-A- 1 212 818
- JP-A- 2000 320 426

## Description

La présente invention concerne un dispositif pour récupérer des fuites de carburant sur les tubes d'alimentation d'une interface, tel qu'un système d'injection de carburant pour moteur thermique.

Dans un système d'injection de carburant, celui-ci est véhiculé par l'intermédiaire de tubes raccordés sur les interfaces que sont les pompes, les rampes, les injecteurs. Ainsi une pompe haute pression distribue le carburant vers une rampe commune par l'intermédiaire d'un tube reliant cette pompe à cette rampe. Le carburant est ensuite acheminé vers les injecteurs par l'intermédiaire de tubes reliant cette rampe à ces injecteurs.

Chaque extrémité d'un tube est constituée par un embout de forme généralement sphérique qui permet une légère inclinaison du tube, qui est vissé et serré sur l'interface pour ancrer le maintien en position du tube et réaliser une étanchéité à ce niveau.

Mais, une éventuelle fuite de carburant au niveau de chaque raccordement est toujours possible : des dispositifs pour récupérer ces fuites accidentelles, les canaliser et les diriger vers un circuit de basse pression, ont déjà été proposés.

Ainsi, dans le document FR-2.878.935-A est décrit un dispositif de protection adapté à un raccord de tuyau d'alimentation en carburant sous pression, notamment de tuyau haute pression d'une pompe d'injection de carburant pour moteur à combustion interne de véhicule automobile. Ce dispositif comprend deux éléments de protection délimitant une enceinte fermée pour le confinement de fuites de carburant du raccord, et un orifice d'évacuation ménagé, au niveau de ces éléments de protection, et apte à permettre un écoulement du carburant vers l'extérieur.

Un tel dispositif de l'art antérieur présente comme inconvénient principal, d'une part, son encombrement et, d'autre part, un risque de défaut d'étanchéité au niveau du plan de jonction des deux éléments de protection.

Des dispositifs de récupération du même genre sont décrits dans les documents DE-203.14.164 et US-5.185.144-A.

De même, on connaît un dispositif pour récupérer des fuites tel que décrit dans le document GB-1.212.818-A, mais ce dispositif ne permet pas de récupérer des fuites au niveau de la liaison entre le tube d'alimentation et l'injecteur.

Enfin, le document WO-03/087567-A est relatif à un injecteur comprenant un raccord de fuite pour l'injection du carburant dans la chambre de combustion d'un moteur à combustion interne, le raccord de fuite étant réalisé d'une seule pièce avec un élément d'injecteur et comprenant un manchon de raccordement de fuite formé intégralement pour raccorder une conduite de retour de fuite. Un évidement est formé dans l'injecteur à un endroit de transition entre un alésage de fuite dans le raccord de fuite et un alésage d'admission de fuite dans l'injecteur, et l'évidement est configuré comme une gorge entourant complètement l'injecteur.

Le raccord de fuite est monté sur l'injecteur : il est donc monté rigide sur celui-ci et permet de récupérer des fuites permanentes. De plus il y a nécessité de créer une gorge dans la paroi interne de l'injecteur. Un tel montage n'autorise donc aucun degré de liberté entre l'injecteur et le tube d'alimentation. De plus, l'étanchéité entre le raccord de fuite et l'injecteur est renforcée par des joints toriques de part et d'autre de la gorge.

Aussi un des buts de la présente invention est-il de fournir un dispositif pour récupérer des fuites de carburant qui permet de récupérer les fuites éventuelles de carburant et de les diriger vers le circuit basse pression de retour vers le réservoir : ceci évite tout risque de contact entre une fuite de carburant et des éléments chauds du moteur ou des éléments de sécurité tels que les disques de frein.

Un autre but de l'invention est de fournir un tel dispositif tout en permettant au tube d'alimentation de prendre différentes inclinaisons par rapport à l'injecteur.

Ces buts, ainsi que d'autres qui apparaîtront par la suite, sont atteints par un dispositif pour récupérer des fuites de carburant sur les tubes d'alimentation d'une interface, tel qu'un système d'injection de carburant pour moteur thermique, chaque tube d'alimentation comportant à chaque extrémité un écrou pour le fixer en position sur une interface, à l'arrière duquel est situé un dispositif pour récupérer des fuites de carburant, lequel dispositif est caractérisé, par la présente invention, par le fait qu'il est constitué d'un récupérateur comportant une durite et qu'il est rendu solidaire de façon étanche de l'écrou et du tube d'alimentation, chaque extrémité du tube d'alimentation est de forme extérieure conique ou sphérique de façon à coopérer avec la paroi intérieure de l'extrémité libre de l'interface correspondante, en amont de cette extrémité le tube d'alimentation comportant un renflement formant butée pour l'écrou.

De préférence, l'écrou comprend une jupe cylindrique et une bague de retenue disposée à l'intérieur de cette jupe solidaire de celle-ci et coopérant avec le renflement formant butée, ceci déterminant un compartiment aval qui est vissé sur la paroi extérieure de l'interface correspondante et un second compartiment de plus petite hauteur qui coopère avec un récupérateur.

Avantageusement, dans le compartiment aval est situé un joint cylindrique prenant appui, d'une part, sur la paroi sur l'extrémité libre de l'interface et, d'autre part, sur la bague de retenue.

De préférence, le récupérateur, qui est une pièce en forme de cloche et en un matériau souple et étanche, entoure le tube d'alimentation, est fixé de façon étanche contre la bague de retenue dans le second compartiment, et comporte une durite, le sommet de la cloche enserrant le tube d'alimentation de façon étanche.

Selon une variante de réalisation de la présente invention, la paroi extérieure du tube d'alimentation située au niveau de la bague de retenue comporte au moins une saignée pour faciliter l'écoulement du fluide, provenant d'une fuite entre l'extrémité du tube d'alimentation et l'interface, du second compartiment vers le compartiment aval.

Selon un autre mode de réalisation, la bague de retenue comporte au moins une saignée pour faciliter l'écoulement du fluide, provenant d'une fuite entre l'extrémité du tube d'alimentation et l'interface, du premier compartiment vers le second compartiment.

La description qui va suivre et qui ne présente aucun caractère limitatif, doit être lue en regard des figures annexées parmi lesquelles :

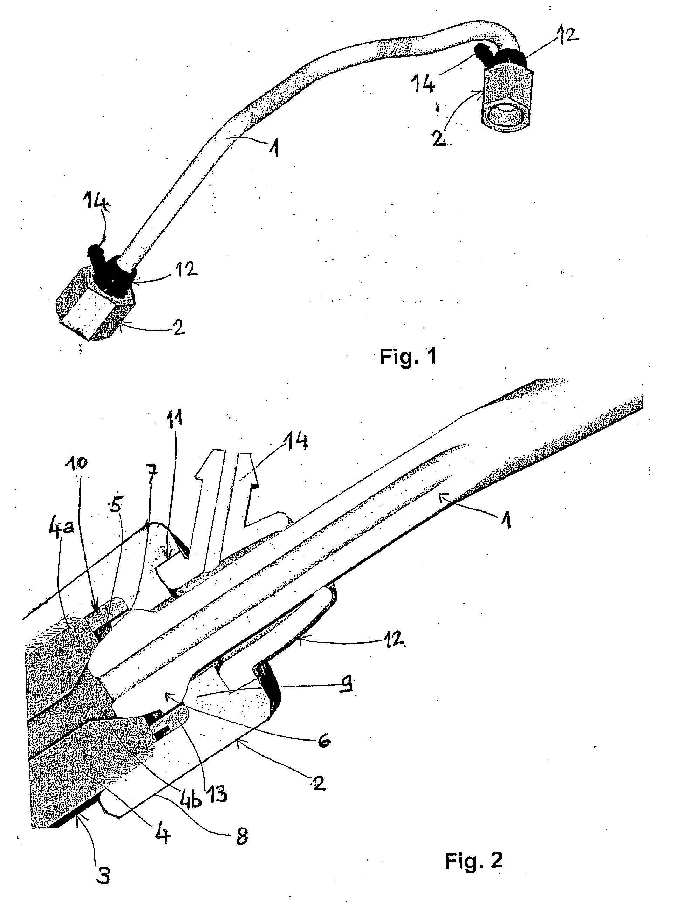

- la figure 1 représente un tube d'alimentation dont les extrémités comportent un dispositif pour récupérer des fuites selon la présente invention ; et,
- la figure 2 est une coupe longitudinale d'une extrémité d'un tube comportant le dispositif selon la figure 1 montée sur une interface.

Ainsi qu'on peut le voir sur ces figures, un tube d'alimentation 1 comporte à chaque extrémité un écrou 2 pour le fixer en position sur une interface 3, à l'arrière duquel est situé un dispositif pour récupérer des fuites de carburant.

L'interface 3 comporte une partie de raccordement 4 de forme tubulaire dont la paroi extérieure 4a est filetée et la paroi intérieure 4b cylindrique s'évase uniquement à son extrémité libre 5.

Chaque extrémité 6 du tube d'alimentation 1 est de forme extérieure conique ou sphérique de façon à coopérer avec la paroi intérieure 4a de l'extrémité libre 5 de l'interface 3 correspondante. En amont de cette extrémité 6, le tube d'alimentation 1 comporte un renflement 7 formant butée pour l'écrou 2.

Cet écrou 2 comprend une jupe cylindrique 8 et une bague de retenue 9 disposée à l'intérieur de cette jupe 8 solidaire de celle-ci et coopérant avec l'épaulement 7 : ceci détermine un premier compartiment 10 qui est vissé sur la paroi extérieure 4a et un second compartiment 11 de plus petite hauteur qui coopère avec un récupérateur 12.

Dans le premier compartiment 10 est situé un joint cylindrique 13 prenant appui, d'une part, sur la paroi sur l'extrémité libre 5 de l'interface 3 et, d'autre part, sur la bague de retenue 9.

Le récupérateur 12 est une pièce en forme de cloche et en un matériau souple et étanche : il entoure le tube d'alimentation 1 et est fixé de façon étanche contre la bague de retenue 9 dans le second compartiment 11. Ce récupérateur 12 comporte une durite 14. Le sommet de la cloche enserre le tube d'alimentation 1 de façon étanche, même si ce dernier présente une certaine inclinaison par rapport à la partie de raccordement 4 de l'interface 3, et ce de façon connue.

Ainsi si une fuite de carburant se produit à la liaison entre les extrémités du tube d'alimentation 1 et l'interface 3, ce carburant est recueilli dans l'espace délimité dans le premier compartiment 10 par le joint cylindrique 13 : le carburant ainsi recueilli peut s'écouler dans l'espace existant ou ménagé entre la bague de retenue 9 et le tube d'alimentation 1 pour pénétrer dans le récupérateur 12 et s'écouler par la durite 14.

Selon une variante de réalisation de la présente invention, la paroi extérieure du tube d'alimentation 1 située au niveau de la bague de retenue 9 comporte au moins une saignée pour faciliter l'écoulement du fluide, provenant d'une fuite entre l'extrémité du tube d'alimentation 1 et l'interface 3, du premier compartiment 10 vers le second compartiment 11.

Le fait que chaque extrémité 6 du tube d'alimentation 1 soit de forme extérieure conique ou sphérique, permet au tube d'alimentation de prendre toute inclinaison possible par rapport à l'injecteur: cette liberté de position est une contrainte que les dispositifs connus ne permettent pas de prendre en compte.

## Revendications

1. Dispositif pour récupérer des fuites de carburant sur les tubes d'alimentation d'une interface, tel qu'un système d'injection de carburant pour moteur thermique, chaque tube d'alimentation (1) comportant à chaque extrémité un écrou (2) pour le fixer en position sur une interface (3), à l'arrière duquel est situé un dispositif pour récupérer des fuites de carburant, **caractérisé, par le fait qu'**il est constitué d'un récupérateur (12) comportant une durite (14) et qu'il est rendu solidaire de façon étanche dudit écrou (2) et dudit tube d'alimentation (1), chaque extrémité (6) du tube d'alimentation (1) étant de forme extérieure conique ou sphérique de façon à coopérer avec la paroi intérieure (4a) de l'extrémité libre (5) de l'interface (3) correspondante, en amont de cette extrémité (6) le tube d'alimentation (1) comportant un renflement (7) formant butée pour l'écrou (2).

2. Dispositif selon la revendication 1, **caractérisé par le fait que** l'écrou (2) comprend une jupe cylindrique (8) et une bague de retenue (9) disposée à l'intérieur de ladite jupe (8), solidaire de celle-ci et coopérant avec le renflement (7) formant butée, ceci déterminant un premier compartiment (10) qui est vissé sur la paroi extérieure (4b) de l'interface (3) correspondante et un second compartiment (11) de plus petite hauteur qui coopère avec le récupérateur (12).

3. Dispositif selon la revendication 2, **caractérisé par le fait que** dans le premier compartiment (10) est situé un joint cylindrique (13) prenant appui, d'une part, sur la paroi de l'extrémité libre (5) de l'interface (3) et, d'autre part, sur la bague de retenue (9).

4. Dispositif selon la revendication 2, **caractérisé par le fait que** le récupérateur (12), qui est une pièce en forme de cloche et en un matériau souple et étanche, entoure le tube d'alimentation (1), est fixé de façon étanche contre la bague de retenue (9) dans le second compartiment (11), et comporte une durite (14), le sommet de la cloche enserrant ledit tube d'alimentation (1) de façon étanche.

5. Dispositif selon la revendication 4, **caractérisé par le fait que** la paroi extérieure du tube d'alimentation (1) située au niveau de la bague de retenue (9) comporte au moins une saignée pour faciliter l'écoulement du fluide, provenant d'une fuite entre l'extrémité du tube d'alimentation et l'interface, du premier compartiment (10) vers le second compartiment (11).

6. Dispositif selon la revendication 4, **caractérisé par le fait que** la bague de retenue (9) comporte au moins une saignée pour faciliter l'écoulement du fluide, provenant d'une fuite entre l'extrémité du tube d'alimentation et l'interface, du premier compartiment (10) vers le second compartiment (11).

## Patentansprüche

1. Vorrichtung zur Aufnahme von Brennstoff-Leckagen bei Versorgungsleitungen einer Kopplungsstelle, insbesondere eines Einspritzsystems für einen Verbrennungsmotor, wobei jede Versorgungsleitung (1) an jedem Ende eine Mutter (2) aufweist zum Fixieren der Versorgungsleitung (1) an der Kopplungsstelle (3), wobei an der Rückseite der Mutter (2) eine Vorrichtung zur Aufnahme von Brennstoff-Leckagen angeordnet ist,
**dadurch gekennzeichnet, dass**
die Vorrichtung eine Aufnahmeeinrichtung (12) umfasst, die einen Schlauch (14) aufweist, der fest und abgedichtet mit der Mutter (2) und der Versorgungsleitung (1) verbunden ist, wobei jedes Ende (6) der Versorgungsleitung (1) eine konische oder sphärische äußere Form aufweist, die korrespondierend mit der Innenwand (4a) des freien Endes (5) der Kopplungsstelle (3) ausgebildet ist, wobei diesem Ende (6) der Versorgungsleitung (1) vorgelagert eine Verdickung (7) angeordnet ist, die einen Anschlag für die Mutter (2) bildet.

2. Vorrichtung gemäß Anspruch 1,
**dadurch gekennzeichnet, dass**
die Mutter (2) einen zylindrischen Mantel (8) und einen Rückhaltering (9) aufweist, der innerhalb des Mantels (8) und mit diesem fest verbunden angeordnet ist und mit der den Anschlag bildenden Verdickung (7) korrespondiert, wodurch eine erste Kammer (10) gebildet ist, die auf die Außenwand (4b) der korrespondierenden Kopplungsstelle (3) geschraubt ist, sowie eine zweite Kammer (11) mit geringerer Höhe, die mit der Aufnahmeeinrichtung (12) zusammenwirkt.

3. Vorrichtung nach Anspruch 2,
**dadurch gekennzeichnet, dass**
in der ersten Kammer (10) eine zylindrische Dichtung (13) angeordnet ist, die einerseits an der Wand des freien Endes (5) der Kopplungsstelle (3) und andererseits an dem Rückhaltering (9) anliegt.

4. Vorrichtung nach Anspruch 2,
**dadurch gekennzeichnet, dass**
die Aufnahmeeinrichtung (12), die als ein glockenförmiges Element und aus einem weichen und dichten Material gebildet ist, die Versorgungsleitung (1) umgibt und gegen den Rückhaltering (9) in der zweiten Kammer (11) abgedichtet fixiert ist und den Schlauch (14) umfasst, wobei die Spitze der Glocke die genannte Versorgungsleitung (1) abdichtend umschließt.

5. Vorrichtung nach Anspruch 4,
**dadurch gekennzeichnet, dass**
die Außenwand der Versorgungsleitung (1), die auf der Höhe des Rückhalterings (9) angeordnet ist, zumindest eine Aussparung aufweist, die einen Fluidfluss eines Fluids, das aus einer Leckage zwischen dem Ende der Versorgungsleitung (1) und der Kopplungsstelle (3) austritt, von der ersten Kammer (10) zur zweiten Kammer (11) erleichtert.

6. Vorrichtung nach Anspruch 4,
**dadurch gekennzeichnet, dass**
der Rückhaltering (9) zumindest eine Aussparung aufweist, die einen Fluidfluss eines Fluids, das aus einer Leckage zwischen dem Ende der Versorgungsleitung (1) und der Kopplungsstelle (3) austritt, von der ersten Kammer (19) zur zweiten Kammer (11) erleichtert.

## Claims

1. A device for collecting fuel leaks on the feed pipes of an interface, such as a fuel injection system for a thermal engine, each feed pipe (1) comprising at each end a nut (2) for securing it in position on an interface (3), behind which nut is located a device for collecting fuel leaks, **characterised in that** it comprises a recovery unit (12) comprising a spout (14) and **in that** it is integral in a sealing manner with said nut (2) and said feed pipe (1), each end (6) of the feed pipe (1) being spherical or conical externally so as to cooperate with the internal wall (4b) of the free end (5) of the corresponding interface (3), upstream of this end (6) the feed pipe (1) comprising a bulge (7) which forms a stop for the nut (2).

2. A device according to claim 1, **characterised in that** the nut (2) comprises a cylindrical apron (8) and a retaining ring (9) arranged inside said apron (8), being integral with said apron and cooperating with the bulge (7) forming a stop, this determining a first compartment (10) which is screwed onto the external wall (4a) of the corresponding interface and a second lower compartment (11) which cooperates with the recovery unit (12).

3. A device according to claim 2, **characterised in that** located in the first compartment (10) is a cylindrical joint (13) which rests on one side against the wall of the free end (5) of the interface (3) and on the other side against the retaining ring (9).

4. A device according to claim 2, **characterised in that** the recovery unit (12) which is a bell-shaped part made of a supple, leak proof material surrounds the feed pipe (1), is attached in a sealing manner against the retaining ring (9) in the second compartment (11) and comprises a spout (14), the top of the bell clasping the feed pipe (1) in a sealing manner.

5. A device according to claim 4, **characterised in that** the external wall of the feed pipe (1) located in the region of the retaining ring (9) comprises at least one channel to facilitate the discharge of the fluid arising from a leak between the end of the feed pipe and the interface, from the first compartment (10) to the second compartment (11).

6. A device according to claim 4, **characterised in that** the retaining ring (9) comprises at least one channel to facilitate the discharge of the fluid arising from a leak between the end of the feed pipe and the interface, from the first compartment (10) to the second compartment (11).
